# EUROPÄISCHE PATENTANMELDUNG

(11) **EP 2 774 749 A1**
(43) Veröffentlichungstag der Anmeldung: **10.09.2014**
(21) Anmeldenummer: 14155384.2
(22) Anmeldetag: 17.02.2014
(51) Int. Cl.: B29C 70/44, B29C 33/06, B29C 35/08

(54) **Laminierpresse und Verfahren zum Herstellen von Faserverbundwerkstoff-Bauteilen**

(30) Priorität: 04.03.2013 DE 202013001996 U
(71) Anmelder: Robert Bürkle GmbH, 72250 Freudenstadt (DE)
(72) Erfinder: Brümmerstädt, Martin, 72275 Alpirsbach (DE); Renz, Wolfgang, 72250 Freudenstadt (DE)
(74) Vertreter: Lemcke, Brommer & Partner Patentanwälte Partnerschaft mbB

(57) **Zusammenfassung**

Die vorliegende Erfindung betrifft eine Laminierpresse zum Herstellen von Faserverbundwerkstoff-Bauteilen unter Einwirkung von Prozessdruck und Prozesswärme aus einem Gelege 7 aus Rovings und aus Ausgangsmaterial für eine Matrix zum Einbetten der Rovings, mit einem Pressenunterteil 1 zur Aufnahme des Geleges 7 aus Rovings und des Ausgangsmaterials für die Matrix und mit einem Pressenoberteil 2, das in einem geschlossenen Zustand der Laminierpresse zusammen mit dem Pressenunterteil 1 eine druckdichte Prozesskammer 3 für das Faserverbundwerkstoff-Bauteil bildet. Das Pressenunterteil 1 und/oder das Pressenoberteil 2 ist relativ zum jeweils anderen Pressenteil bewegbar, um die Laminierpresse zu öffnen und zu schließen, wobei Mittel 4, 10 zum Evakuieren und/oder Druckbeaufschlagen der Prozesskammer 3 vorhanden sind. Ferner sind Infrarot-Wärmestrahler 11 zum Einbringen der Prozesswärme in die Rovings und/oder in das Ausgangsmaterial für die Matrix vorgesehen. Es wird außerdem ein Verfahren zum Herstellen von Faserverbundwerkstoff-Bauteilen unter Verwendung einer solchen Laminierpresse vorgeschlagen.

## Beschreibung

Die Erfindung betrifft eine Laminierpresse zum Herstellen von Faserverbundwerkstoff-Bauteilen nach dem Oberbegriff des Anspruchs 1 sowie ein Verfahren zum Herstellen von Faserverbundwerkstoff-Bauteilen unter Verwendung einer solchen Laminierpresse nach dem Oberbegriff des Anspruchs 10.

Mit einer Laminierpresse bzw. mit einem Verfahren der vorliegenden Art werden Faserverbundwerkstoff-Bauteile hergestellt, indem ein Gelege aus Rovings sowie Ausgangsmaterial für eine Matrix zum Einbetten der Rovings in die Laminierpresse eingebracht wird. Dort wird das Ausgangsmaterial für die Matrix mittels Prozessdruck und Prozesswärme aktiviert, so dass die Rovings in der hierdurch entstehenden Matrix eingebettet werden. Die Laminierpresse umfasst hierbei ein Pressenunterteil zur Aufnahme des Geleges aus Rovings und des Ausgangsmaterials für die Matrix sowie ein Pressenoberteil, das in einem geschlossenen Zustand der Laminierpresse zusammen mit dem Pressenunterteil eine druckdichte Prozesskammer für das Faserverbundwerkstoff-Bauteil bildet. Das Pressenunterteil und/oder das Pressenoberteil ist relativ zum jeweils anderen Pressenteil bewegbar, um die Laminierpresse zu öffnen und zu schließen. Die Prozesskammer ist evakuierbar und/oder druckbeaufschlagbar.

Rovings sind Bündel von endlosen Fasern bzw. Filamenten, die zur Fertigung von Faserverbundwerkstoffen verwendet werden. Hierbei kommen Einzelfilamente aus Glas, Keramik, Aramid und dergleichen zum Einsatz, insbesondere auch Carbonfasern bzw. Kohlenstofffasern. Rovings aus Carbonfasern bestehen aus bis zu mehreren tausend Filamenten und werden oft in Bandform verarbeitet. Im Rahmen der vorliegenden Erfindung werden auch solche Rovingbänder, die streng genommen aus mehreren zusammengeführten Rovings bestehen, sowie Bündel aus Rovings oder aus Roving-Bändern als "Roving" bezeichnet.

Um aus Rovings Faserverbundwerkstoff-Bauteile zu fertigen, müssen die Rovings zunächst zu einem Gelege, das aus mindestens einer Gelegeschicht besteht, gelegt werden. Ein Faserverbundwerkstoff besteht im Wesentlichen aus zwei Hauptkomponenten, den Rovings und einer diese einbettenden Matrix.

Als Matrix im Sinne der vorliegenden Erfindung ist auch ein thermoplastisches Bindesystem zum Verbinden einzelner Lagen von gegebenenfalls bereits mit anderem Matrix-Material versehenen Rovings zu einem Preform zu verstehen.

Ein Hauptanwendungsgebiet der vorliegenden Erfindung ist bei der Herstellung von mit Carbonfasern verstärkten Kunststoffen (CFK) gegeben, die aufgrund ihrer Belastbarkeit und ihres geringen Gewichts zunehmend Werkstoffe aus Stahl oder Aluminium ersetzen, insbesondere im Fahrzeugbau, jedoch auch bei stationären technischen Anwendungen mit bewegten Teilen, wie beispielsweise Windkraftanlagen. Hier werden neben den Carbonfasern, die in der Regel aus Polyacrylnitril als Ausgangsstoff hergestellt wurden und zu ca. 95 % aus reinem Kohlenstoff bestehen, als Matrix Epoxidharze und Thermoplaste verwendet.

Die Festigkeitseigenschaften von Faserverbundwerkstoffen sind entscheidend von der Orientierung der darin verlaufenden Rovings abhängig. Denn die in der Matrix eingebetteten Rovings sind hoch zugfest, so dass sich bei einer Einbettung von Rovings in beispielsweise nur einer Raumrichtung eine unidirektionale Festigkeit des Faserverbund-Bauteils ergibt. Die mechanischen Eigenschaften quer zur Faserrichtung der Rovings sind zumeist schlecht. Um Faserverbundwerkstoff-Bauteile mit sinnvollen Eigenschaften zu fertigen, werden die Rovings daher meist so gelegt, dass sie in mindestens zwei Raumrichtungen orientiert verlaufen. Insbesondere zur maschinellen Herstellung von mit Carbonfasern verstärkten Kunststoffen (CFK) werden die Rovings üblicherweise gewebt oder gewirkt, so dass sie als flächige Gelegeschicht zum Einbetten in die Matrix vorliegen, wobei die Rovings in dieser Gelegeschicht senkrecht zueinander orientiert sind. Ein Beispiel für ein entsprechendes Verfahren findet sich in der DE 100 05 202 A1.

Insbesondere im Fahrzeugbau ist es wünschenswert, dreidimensional geformte Bauteile aus CFK-Werkstoff herzustellen. Darüber hinaus müssen diese Bauteile oftmals ganz spezielle Festigkeitsanforderungen erfüllen, so dass die Orientierung der in der Matrix eingebetteten Rovings entsprechend verlaufen sollte. Gewebte oder gewirkte Gelege sind hier oft nicht optimal. Bei Luftfahrzeugen sowie bei Fahrrädern und im Motorsport werden daher FaserverbundwerkstoffBauteile, insbesondere aus CFK, eingesetzt, zu deren Herstellung die Rovings von Hand gelegt werden. Die Orientierung der Rovings kann so optimal ausgestaltet werden, jedoch ist eine solche Fertigung von Hand naturgemäß sehr kostenintensiv. Eine Großserienfertigung, insbesondere im Kraftfahrzeugbau, ist mit handgelegten Rovings nicht möglich.

Um Rovings in gewünschter Dichte und Ausrichtung, die von den gewünschten mechanischen Eigenschaften des fertigen Bauteils abhängen, automatisiert zu einem Gelege zu legen, ist es im Stand der Technik bekannt, mindestens ein Roving über eine Anzahl von Stiftelementen zu führen, an denen das Roving jeweils umgelenkt wird, um eine flächige, möglichst multiaxiale Gelegeschicht zu bilden. Beispiele für ein Verfahren zum automatisierten Legen von Rovings über eine Anzahl von Stiftelementen sind in der EP-A-0 591 822 und der EP-A-0 110 698 zu finden.

Das als Halbzeug dienende Gelege aus Rovings muss schließlich, um das erwünschte Faserverbundwerkstoff-Bauteil herstellen zu können, in die Matrix eingebettet werden. Hierzu kann das Gelege aus Rovings sowie das Ausgangsmaterial für die Matrix in eine Laminierpresse eingebracht werden, wo das Ausgangsmaterial für die Matrix unter Druck und Wärme aufgeschmolzen bzw. aktiviert und der Verbund mit den Rovings hergestellt wird. Das Ausgangsmaterial für die Matrix kann hierbei innerhalb oder außerhalb der Presse auf das Gelege oder zwischen mehrere Gelegeschichten aufgestreut oder in Form einer Folie aufgelegt werden; es ist jedoch auch möglich, Rovings zu verwenden, die bereits mit Matrixmaterial getränkt sind.

Das Herstellen eines Faserverbundwerkstoff-Bauteils in einer Laminierpresse bietet den großen Vorteil, dass verschiedenste dreidimensionale Bauteilformen hergestellt werden können. Beispielsweise kann eine Negativform der gewünschten Bauteiloberfläche in das Pressenunterteil eingebracht werden, beispielsweise mittels einer Palette, die in die Laminierpresse eingebracht und aus dieser entnommen werden kann und das Pressenunterteil bildet. Auf diese Negativform werden das Gelege und das Matrixmaterial aufgelegt, und beim Pressen schmiegt sich das Gelege an die Negativform an, so dass sich im Ergebnis die gewünschte dreidimensionale Form des Faserverbundwerkstoff-Bauteils ergibt. Es können hier auch mehrere Gelege mit unterschiedlichen Orientierungen übereinandergelegt werden.

Laminierpressen der vorliegenden Art sind zum Beschichten von Möbelteilen aus Holzwerkstoff oder zum Herstellen von Photovoltaik-Modulen bekannt. Soweit flache, plattenförmige Bauteile laminiert werden, ist es im Stand der Technik üblich, das Pressenunterteil als Heizplatte auszubilden, um die Prozesswärme durch direkten Kontakt mit dem Bauteil in dieses einzubringen. Soweit dreidimensionale Beschichtungen von Möbelbauteilen erfolgen sollen, wird das Pressenoberteil mit einer Heizplatte ausgestattet und eine zur Beschichtung vorgesehene Folie oder eine am Pressenoberteil angebrachte Membran nahe an die Heizplatte herangeführt, um die Prozesswärme aufzunehmen, die sie dann beim Pressvorgang, bei dem die Folie und/oder die Membran auf das Werkstück aufgedrückt wird, an das Werkstück abgibt. Zum Einbringen der Prozesswärme in die Prozesskammer ist es außerdem bekannt, ein heißes Gas, insbesondere Heißluft, in die Prozesskammer einzublasen.

Faserverbundwerkstoff-Bauteile stellen allerdings spezifische Anforderungen an die einzubringende Prozesswärme. Diese sollte rasch und in einem spezifischen Temperaturbereich auf das Matrixmaterial einwirken, um dessen Aktivierung zu bewirken, und oft ist es auch notwendig, das Faserverbundwerkstoff-Bauteil nach der Aktivierung der Matrix unter Prozessdruck bzw. Auflast abzukühlen, bevor es aus der Laminierpresse entnommen werden kann. Aufheiz- und Abkühlvorgänge sind bei Verwenden einer Heizplatte allerdings zeitintensiv und es müssen vergleichsweise große Mengen an Energie eingesetzt werden.

Des Weiteren sind Faserverbundwerkstoff-Bauteile, anders als die bekannten Werkstücke bei der Photovoltaik-Modulherstellung oder bei der Möbelplattenherstellung, oft solcherart dreidimensional geformt, dass ihre Dicke variiert und ihre Oberfläche sehr uneben ist. Hier stoßen Laminierpressen der bekannten Art an ihre Grenzen und können bislang nicht eingesetzt werden.

Der vorliegenden Erfindung liegt daher die Aufgabe zugrunde, eine Laminierpresse und ein Verfahren zum Herstellen von Faserverbundwerkstoff-Bauteilen der eingangs genannten Art vorzuschlagen, mit denen die oben genannten Grenzen ihres Einsatzes überwunden sind.

Gelöst ist diese Aufgabe durch eine Laminierpresse mit den Merkmalen des Anspruchs 1 und durch ein Verfahren mit den Merkmalen des Anspruchs 10. Bevorzugte Ausgestaltungen der erfindungsgemäßen Laminierpresse finden sich in den Ansprüchen 2 bis 9; vorteilhafte Weiterbildungen des erfindungsgemäßen Verfahrens sind in den Ansprüchen 11 und 12 niedergelegt.

Gemäß der vorliegenden Erfindung wird die Prozesswärme demnach mittels Infrarot-Wärmestrahlern in die Rovings und/oder in das Ausgangsmaterial für die Matrix eingebracht. Dies hat den großen Vorteil, dass die von den Wärmestrahlern abgegebene Prozesswärme nur von Körpern aufgenommen wird, die Infrarotstrahlung absorbieren. Des Weiteren geben die Wärmestrahler die Prozesswärme gerichtet ab. Es ist daher möglich, die Prozesswärme gezielt in das herzustellende Faserverbundwerkstoff-Bauteil einzubringen, ohne die gesamte Prozesskammer aufzuheizen. Hierdurch wird ein wesentlich schnelleres Erwärmen des Matrixmaterials ermöglicht. Umgekehrt kann durch Abschalten der Wärmestrahler ein Abkühlprozess erfolgen, der mit herkömmlichen Laminierpressen nicht möglich gewesen ist. Nicht zuletzt kann mittels dieser Effekte eine für das verwendete Matrixmaterial maßgeschneiderte Temperaturführung mit Aufheizund Abkühlrampen erfolgen.

Mit Infrarot-Wärmestrahlern ist es auch möglich, ortsaufgelöst unterschiedlich große Wärmemengen in das herzustellende Faserverbundwerkstoff-Bauteil einzubringen, um beispielsweise unterschiedliche Bauteildicken oder Kantenbereiche zu berücksichtigen. Hierzu ist es vorteilhaft, wenn mehrere InfrarotWärmestrahler vorhanden sind, die einzeln oder gruppenweise ansteuerbar sind, um die Prozesswärme ortsaufgelöst in das Faserverbundwerkstoff-Bauteil einzubringen. Zweckmäßigerweise sind die Infrarot-Wärmestrahler am Pressenoberteil angeordnet und bilden dort ein Strahlerfeld.

Um die Prozesswärme optimal in das Bauteil einzubringen, ist es bevorzugt, wenn Sensoren vorhanden sind, die die eingebrachte Prozesswärme im oder am Faserverbundwerkstoff-Bauteil ortsaufgelöst ermitteln und die InfrarotWärmestrahler anhand der ermittelten Werte steuern. Solche Sensoren können am Pressenunterteil vorgesehen sein und mittels direktem Kontakt zum Bauteil dessen Temperatur ermitteln. Es können jedoch auch Sensoren eingesetzt werden, die die Temperatur, insbesondere die Oberflächentemperatur des Bauteils kontaktlos und ortsaufgelöst ermitteln können. Hierdurch ist eine sehr exakte Temperaturführung beim Aktivieren des Matrixmaterials möglich, wobei eine dreidimensionale Form des Bauteils berücksichtigt werden kann.

Wenn in einem Pressenzyklus mehrere Bauteile hergestellt werden, ist es im Rahmen der vorliegenden Erfindung auch möglich, einzelne Bauteile gezielt zu erwärmen oder gezielt mit unterschiedlichen Temperaturen zu erwärmen, so dass eine hohe Flexibilität gegeben ist.

Zum Aufbringen der für die Herstellung des Faserverbundwerkstoff-Bauteils benötigten Prozessdrucks kann zum Aufbringen einer Auflast auf das herzustellende Bauteil eine Membran vorgesehen sein, die am Pressenoberteil befestigt ist oder mit dem Werkstück in die Presse eingebracht wird. Eine solche Membran unterteilt die Prozesskammer in eine untere Kammerhälfte und eine obere Kammerhälfte, wobei zweckmäßigerweise die untere Kammerhälfte und die obere Kammerhälfte jeweils separat evakuierbar und/oder mit Druck beaufschlagbar sind. Durch Evakuieren der unteren Kammerhälfte und/oder durch Druckbeaufschlagen der oberen Kammerhälfte wird die Membran auf das herzustellende Bauteil aufgelegt und an dieses angepresst, wodurch die Auflast zum Erzeugen des notwendigen Prozessdrucks bereitgestellt wird.

Insbesondere wenn die erfindungsgemäßen Infrarot-Wärmestrahler am Pressenoberteil angeordnet sind, kann es zweckmäßig sein, wenn die Membran aus einem für Infrarot-Strahlung durchlässigen Material besteht. Denn dann heizt sich die Membran selbst nicht auf und behindert nicht den Wärmeeintrag in das Bauteil; die Membran fungiert demnach als reine Kompaktierungsfolie. Hierbei ist es beispielsweise möglich, das herzustellende Bauteil zunächst mittels einer Auflast mit dem Prozessdruck zu beaufschlagen, dann erst mittels der InfrarotWärmestrahler die Prozesswärme einzubringen, das Bauteil unter Beibehaltung der Auflast wieder abkühlen zu lassen und den Prozessdruck erst dann wieder zu beseitigen.

Umgekehrt kann die Membran jedoch auch ganz bewusst aus einem InfrarotStrahlung absorbierenden Material bestehen, so dass sich die Membran durch Wärmeeintrag von den Infrarot-Wärmestrahlern erwärmt und die so aufgenommene Prozesswärme durch Kontakt an das herzustellende Bauteil abgibt. In einer erfindungsgemäß ausgestalteten Laminierpresse kann die Membran auch beim Abgeben der Wärme an das Bauteil nicht auskühlen, da die abgegebene Wärme mittels der Infrarot-Wärmestrahler rasch nachgeführt werden kann.

Die Membran kann auch aus einem für Infrarot-Strahlung teils durchlässigen und teils absorbierenden Material hergestellt sein, so dass sich beide Effekte überlagern.

Schließlich ist es im Rahmen der vorliegenden Erfindung auch möglich, dass eine Folie, die als Teil des Faserverbundwerkstoff-Bauteils vorgesehen ist, die Funktion der Membran übernimmt, wobei diese Folie bzw. Membran dann nicht am Pressenoberteil angebracht sein muss, sondern zusammen mit dem Bauteil bzw. dessen Ausgangsmaterialien in die Presse eingebracht wird. Auch für diese als Membran fungierende Folie können infrarotdurchlässige, infrarotabsorbierende oder teils durchlässige und teils absorbierende Materialien verwendet werden, um die oben erwähnten Effekte zu erzielen.

Ein Ausführungsbeispiel für eine erfindungsgemäß ausgestaltete Laminierpresse, die mit dem erfindungsgemäßen Verfahren betrieben wird, wird anhand der beigefügten Zeichnung im Folgenden beschrieben und erläutert. Es zeigt:

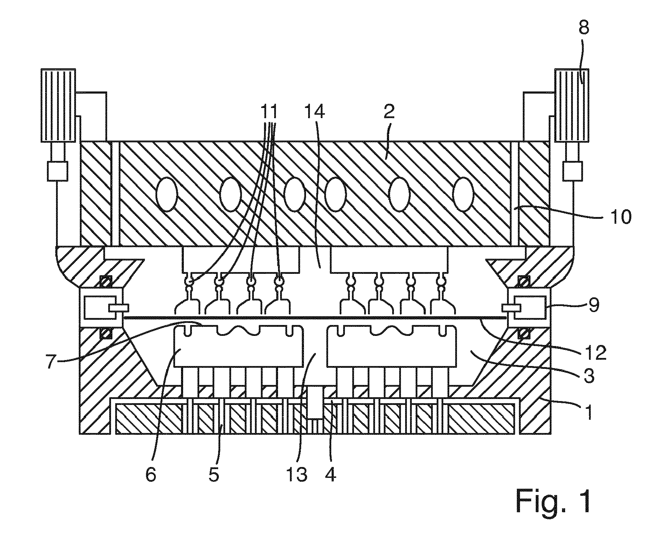

- Figur 1: eine schematische Schnittdarstellung durch eine erfindungsgemäß ausgestaltete Laminierpresse.

Die einzige Figur 1 stellt in einem schematischen Schnitt eine Laminierpresse dar, die entsprechend der vorliegenden Erfindung ausgestaltet ist. Sie umfasst ein Pressenunterteil 1 und ein Pressenoberteil 2, das durch Anheben und Absenken relativ zum Pressenunterteil 1 bewegbar ist, um eine zwischen diesen beiden Teilen gebildete Prozesskammer 3 zu öffnen und zu schließen. Das Pressenunterteil 1 besteht im Wesentlichen aus einer Palette mit Entlüftungskanälen 4 und Halterungen 5 für Formstücke 6 zum Auflegen von Gelegen 7 aus Rovings. Diese Palette kann als Ganzes, mitsamt den Formstücken 6 von der gezeigten Position unterhalb des Pressenoberteils 2 weggenommen und insbesondere seitlich wegbewegt werden, um sie mit Gelegen 7 aus Rovings zu bestücken bzw. die fertig laminierten Faserverbundwerkstoff-Bauteile zu entnehmen. Es können mehrere Paletten vorgesehen sein, um den Durchsatz zu erhöhen.

Das Pressenoberteil 2 ist mit einem Antrieb 8 zum Anheben und Absenken sowie mit einer randseitig umlaufenden Dichtung 9 versehen, die im abgesenkten Zustand auf Dichtflächen der Palette bzw. des Pressenunterteils 1 zu liegen kommt und die Prozesskammer 3 druckdicht abdichtet. Ferner weist das Pressenoberteil 2 Belüftungskanäle 10 sowie erfindungsgemäß Infrarot-Wärmestrahler 11 auf, die an der inneren Oberseite der Prozesskammer 3 jeweils ein Strahlerfeld für jedes Formstück 6 mit Gelegen 7 aus Rovings bilden. Das Strahlerfeld wird aus jeweils mehreren Infrarot-Wärmestrahlern 11 gebildet, welche, wie in Figur 1 schematisch angedeutet, jeweils separat ansteuerbar sind, um die Gelege 7 aus Rovings ortsaufgelöst unterschiedlich mit Wärmestrahlung zu beaufschlagen.

Zwischen der Dichtung 9 und dem Pressenunterteil 1 ist eine Membran 12 hindurchgeführt. Diese unterteilt die Prozesskammer 3 in eine untere Kammerhälfte 13 und eine obere Kammerhälfte 14. Diese Membran 12 ist im vorliegenden Ausführungsbeispiel eine dünne, für Infrarotstrahlung durchlässige Folie, die zusammen mit dem als Palette ausgebildeten Pressenunterteil 1 in die gezeigte Position unterhalb des Pressenoberteils 2 gebracht und nach dem Pressen wieder vom Pressenoberteil 2 weggenommen wird.

Das Verfahren zum Herstellen von Faserverbundwerkstoff-Bauteilen mit der in Figur 1 schematisch dargestellten Laminierpresse wird wie folgt durchgeführt:
Zunächst wird eine Palette 1 mit darin angeordneten Formstücken 6 abseits der Laminierpresse bestückt, d.h. es wird jeweils ein Gelege 7 aus Rovings auf jedes Formstück 6 aufgelegt oder durch Aufbringen von einzelnen Rovings auf dem Formstück 6 hergestellt. Dieses Gelege 7 kann aus mehreren Schichten von belastungsangepasst orientierten Rovings oder aus einer oder mehreren Schichten von Rovingsgeweben oder dergleichen mehr bestehen, wobei die Rovings beispielsweise mit Matrixmaterial getränkt oder das Matrixmaterial in zwischenliegenden Schichten oder als Flocken in bzw. auf das Gelege aufgebracht wird. Das so mit Ausgangsmaterial für die Matrix versehene Gelege aus Rovings, das auf dem Formstück 6 aufliegt, wird sodann zusammen mit der Palette 1 unter das Pressenoberteil 2 verbracht, wodurch die Palette zum Pressenunterteil 1 wird. Durch Absenken des Pressenoberteils 2 wird die dort randseitig umlaufende Dichtung 9 auf eine entsprechende Dichtungsfläche des Pressenunterteils 1 aufgepresst, so dass eine druckdichte Prozesskammer 3 entsteht. Die zuvor auf die Palette 1 aufgelegte Folie bzw. Membran 12 wird hierbei an der Dichtung 9 geklemmt, und sie unterteilt die Prozesskammer 3 in eine untere Kammerhälfte 13 und eine obere Kammerhälfte 14.

Je nach verwendetem Ausgangsmaterial für die Matrix wird nun zunächst die untere Kammerhälfte 13 durch die Entlüftungskanäle 4 hindurch evakuiert und gegebenenfalls die obere Kammerhälfte 14 über die Belüftungskanäle 10 mit Überdruck beaufschlagt, so dass sich die Membran 12 an die Formstücke 6 und damit auch an die darauf befindlichen Gelege 7 anpresst und eine Auflast auf die Gelege 7 ausübt. Hierdurch werden diese in die Topografie der Formstücke 6 hineingepresst, wobei diese Topografie eine Negativform der erwünschten Form des herzustellenden Faserverbundwerkstoff-Bauteils ist. Sodann werden die Infrarot-Wärmestrahler 11 aktiviert, und zwar solcherart ortsaufgelöst, dass unterschiedliche Bereiche der Gelege 7 unterschiedlich mit Wärme beaufschlagt werden. Die Infrarotstrahlung der Infrarot-Wärmestrahler 11 dringt durch die Membran 12 hindurch und wird im Wesentlichen nur von den Gelegen 7 bzw. dem darin oder darauf befindlichen Matrixmaterial absorbiert, so dass sich dieses gezielt erwärmt und aufgrund der hierdurch entstehenden Prozesswärme aktiviert wird.

Nach der zur Aktivierung des Matrixmaterials benötigten Zeit werden die Infrarot-Wärmestrahler 11 ausgeschaltet, so dass sich das Gelege 7 bzw. das fertige Faserverbundwerkstoff-Bauteil rasch wieder abkühlt. Denn aufgrund der erfindungsgemäßen Infrarot-Wärmestrahler hat sich im Wesentlichen nur das Faserverbundwerkstoff-Bauteil erwärmt, nicht jedoch die übrigen Teile der Prozesskammer bzw. der Laminierpresse. Nach dem Abkühlen wird die obere Kammerhälfte 14 entlüftet und die untere Kammerhälfte 13 belüftet, so dass sich die Membran 12 wieder von den Faserverbundwerkstoff-Bauteilen löst und die entsprechende Auflast bzw. der Prozessdruck wieder aufgehoben ist. Durch Anheben des Pressenoberteils 2 wird die Palette 1 frei und kann seitlich aus der Laminierpresse entnommen werden, so dass die fertigen FaserverbundwerkstoffBauteile leicht von den Formstücken 6 abgehoben werden können.

Anstatt der beschriebenen Verfahrensweise können die Gelege 7 aus Rovings auch zuerst erwärmt und dann erst mit einer Auflast beaufschlagt werden, oder es ist möglich, die Auflast zu beseitigen, während die Prozesswärme noch wirkt und dergleichen mehr. Es kann auch eine Membran 12 zum Einsatz kommen, die fest am Pressenoberteil 2 angebracht ist, sowie gegebenenfalls Infrarotstrahlung absorbiert und eine hohe Wärmekapazität besitzt, so dass die Prozesswärme von den Infrarot-Wärmestrahlern 11 nur indirekt über die Membran 12 und über einen Kontakt derselben mit den Gelegen 7 aus Rovings in dieselben eingebracht wird.

Die Verwendung einer zumindest zum Teil infrarotdurchlässigen Membran 12 bietet allerdings den Vorteil, dass die Prozesswärme innerhalb weniger Sekunden am Gelege 7 aus Rovings anliegt und darüber hinaus sehr genau auf das vom jeweiligen Matrixmaterial benötigte Temperaturfenster geregelt werden kann, insbesondere wenn die Temperatur im entstehenden Faserverbundwerkstoff-Bauteil mittels Sensoren detektiert wird. Da Infrarot-Wärmestrahler 11 Bauteiltemperaturen von typischerweise 30°C bis über typischerweise 220°C erzeugen können, können viele verschiedene Matrixmaterialien und auch unterschiedliche Rovings verwendet werden. Durch die individuelle Ansteuerbarkeit und Regelbarkeit der einzelnen Infrarot-Wärmestrahler 11 der beiden im Ausführungsbeispiel vorhandenen Strahlerfelder kann gewährleistet werden, dass beispielsweise dickere Teile des dreidimensional geformten Faserverbundwerkstoff-Bauteils mit einer höheren Wärmemenge beaufschlagt werden, als dünnere Teile, so dass die Temperaturverteilung im Bauteil möglichst gleichmäßig ist und hierdurch eine hohe Produktqualität erzielt werden kann.

Mit der erfindungsgemäßen Laminierpresse können viele verschiedene Prozesse mit unterschiedlichen Rampen und zeitlichen Verläufen einerseits des Prozessdrucks und andererseits der Prozesswärme gefahren werden.

## Patentansprüche

1. Laminierpresse zum Herstellen von Faserverbundwerkstoff-Bauteilen unter Einwirkung von Prozessdruck und Prozesswärme aus einem Gelege (7) aus Rovings und aus Ausgangsmaterial für eine Matrix zum Einbetten der Rovings, mit einem Pressenunterteil (1) zur Aufnahme des Geleges (7) aus Rovings und des Ausgangsmaterials für die Matrix und mit einem Pressenoberteil (2), das in einem geschlossenen Zustand der Laminierpresse zusammen mit dem Pressenunterteil (1) eine druckdichte Prozesskammer (3) für das Faserverbundwerkstoff-Bauteil bildet, wobei das Pressenunterteil (1) und/oder das Pressenoberteil (2) relativ zum jeweils anderen Pressenteil bewegbar ist, um die Laminierpresse zu öffnen und zu schließen, und wobei Mittel (4, 10) zum Evakuieren und/oder Druckbeaufschlagen der Prozesskammer (3) vorhanden sind,
**dadurch gekennzeichnet,**
**dass** Infrarot-Wärmestrahler (11) zum Einbringen der Prozesswärme in die Rovings und/oder in das Ausgangsmaterial für die Matrix vorgesehen sind.

2. Laminierpresse nach Anspruch 1,
**dadurch gekennzeichnet,**
**dass** mehrere Infrarot-Wärmestrahler (11) vorhanden sind, die einzeln oder gruppenweise ansteuerbar sind.

3. Laminierpresse nach einem der Ansprüche 1 oder 2,
**dadurch gekennzeichnet,**
**dass** die Infrarot-Wärmestrahler (11) am Pressenoberteil (2) angeordnet sind und dort ein Strahlerfeld bilden.

4. Laminierpresse nach Anspruch 3,
**dadurch gekennzeichnet,**
**dass** das Strahlerfeld eine der Form des Faserverbundwerkstoff-Bauteils angepasste Fläche bildet.

5. Laminierpresse nach mindestens einem der Ansprüche 1 bis 4,
**dadurch gekennzeichnet,**
**dass** eine Membran (12) zum Aufbringen einer Prozessauflast auf das Faserverbundwerkstoff-Bauteil und zum Unterteilen der Prozesskammer (3) in eine untere Kammerhälfte (13) und eine obere Kammerhälfte (14) vorhanden ist, wobei die untere Kammerhälfte (13) und die obere Kammerhälfte (14) separat evakuierbar und/oder mit Druck beaufschlagbar sind.

6. Laminierpresse nach Anspruch 5,
**dadurch gekennzeichnet,**
**dass** die Membran (12) aus einem für Infrarotstrahlung durchlässigen Material besteht.

7. Laminierpresse nach einem der Ansprüche 5 oder 6,
**dadurch gekennzeichnet,**
**dass** die Membran (12) aus einem Infrarotstrahlung absorbierenden Material besteht.

8. Laminierpresse nach Anspruch 7,
**dadurch gekennzeichnet,**
**dass** die Membran (12) eine Folie ist, die als Teil des Faserverbundwerkstoff-Bauteils vorgesehen ist.

9. Laminierpresse nach mindestens einem der Ansprüche 1 bis 8,
**dadurch gekennzeichnet,**
**dass** das Pressenunterteil (1) mindestens ein Formstück (6) zum Aufnehmen des Geleges (7) aus Rovings zusammen mit dem Ausgangsmaterial für die Matrix aufweist, wobei das Formstück (6) der Form des fertigen Faserverbundwerkstoff-Bauteils angepasst ist.

10. Verfahren zum Herstellen von Faserverbundwerkstoff-Bauteilen unter Verwendung einer Laminierpresse nach mindestens einem der Ansprüche 1 bis 9, wobei ein Gelege (7) aus Rovings sowie Ausgangsmaterial für eine Matrix in eine Laminierpresse eingebracht und dort das Ausgangsmaterial für die Matrix unter Einwirkung von Prozessdruck und Prozesswärme aktiviert wird, so dass die Rovings in der entstehenden Matrix eingebettet werden,
**dadurch gekennzeichnet,**
**dass** die Prozesswärme durch Infrarot-Wärmestrahler (11) in die Rovings und/oder in das Ausgangsmaterial für die Matrix eingebracht wird.

11. Verfahren nach Anspruch 10,
**dadurch gekennzeichnet,**
**dass** die Infrarot-Wärmestrahler (11) einzeln und/oder in Gruppen aktiviert und/oder angesteuert werden, um die Prozesswärme ortsaufgelöst in das Faserverbundwerkstoff-Bauteil einzubringen.

12. Verfahren nach Anspruch 1 1 ,
**dadurch gekennzeichnet,**
**dass** mittels Sensoren die eingebrachte Prozesswärme am oder im Faserverbundwerkstoff-Bauteil ortsaufgelöst ermittelt und die InfrarotWärmestrahler (11) anhand der ermittelten Werte gesteuert werden.
